# EUROPÄISCHE PATENTANMELDUNG

(11) **EP 1 441 201 A2**
(43) Veröffentlichungstag der Anmeldung: **28.07.2004**
(21) Anmeldenummer: 04001133.0
(22) Anmeldetag: 21.01.2004
(51) Int. Cl.: G01C 21/36

(54) **Multimediasystem, insbesondere zur Realisierung einer Offboard-Navigation in einem Kraftfahrzeug**

(30) Priorität: 24.01.2003 DE 10302924
(71) Anmelder: DaimlerChrysler AG, 70567 Stuttgart (DE)
(72) Erfinder: Christof, Michael, 70178 Stuttgart (DE); Franke, Jan, 70193 Stuttgart (DE); Grund, Ronald, 71083 Herrenberg (DE); Hansen, Volker, 71034 Böblingen (DE); Walch, Lars, 76307 Karlsbad (DE)

(57) **Zusammenfassung**

Die Erfindung betrifft ein Multimediasystem, insbesondere zur Realisierung einer Offboard-Navigation in einem Kraftfahrzeug, umfassend die Komponenten lösbar mit dem Kraftfahrzeug verbindbarer Taschencomputer bzw. das Smartphon, lösbar mit dem Kraftfahrzeug verbindbares Mobiltelefon und Satelliten-Positionsbestimmungsmittel.

Erfindungsgemäß sind im Kraftfahrzeug Halterungen zum Einlegen von Taschencomputer und Mobiltelefon vorgesehen, und wenn Taschencomputer und Mobiltelefon in die Halterungen eingelegt und so mit dem Kraftfahrzeug verbunden sind, wird ein spezieller anstatt des allgemeinen Betriebsmodus für den Taschencomputer derart selektiert, dass zwischen Taschencomputer, Mobiltelefon und Satelliten-Positionsbestimmungsmittel eine datentechnische Verbindung hergestellt und der Taschencomputer ausschließlich in einer die Verkehrssicherheit nicht beeinträchtigenden Weise bedienbar ist.

## Beschreibung

Die Erfindung betrifft ein Multimediasystem, insbesondere zur Realisierung einer Offboard-Navigation in einem Kraftfahrzeug, umfassend die Komponenten lösbar mit dem Kraftfahrzeug verbindbarer Taschencomputer, lösbar mit dem Kraftfahrzeug verbindbares Mobiltelefon und Satelliten-Positionsbestimmungsmittel. Dem Multimediasystem werden auf Anforderung über eine zumindest zeitweise, drahtlose Verbindung mit einer externen Rechnereinheit die zur Zielführung im Kraftfahrzeug benötigten Daten bereitgestellt.

Ein derartiges System wird im Internet unter der Adresse http://www.ptv.de/cgi-bin/produkte/naviguide.pl vorgestellt, die Adresse wurde am 17.01.2003 verifiziert.

Der Erfindung liegt die Aufgabe zugrunde, ein Multimediasystem zur Realisierung einer Offboard-Navigation in einem Kraftfahrzeug anzugeben, das eine einfache Bedienung erlaubt, universelle Einsatzmöglichkeiten bietet und gleichzeitig die sichere Führung des Kraftfahrzeuges gewährleistet.

Diese Aufgabe wird erfindungsgemäß durch die Merkmale der Ansprüche 1 und 2 gelöst. Die Unteransprüche betreffen vorteilhafte Aus- und Weiterbildungen der Erfindung.

Der Hauptgedanke der Erfindung besteht darin, dass im Kraftfahrzeug Halterungen zum Einlegen von Taschencomputer und Mobiltelefon vorgesehen sind und dass, wenn Taschencomputer und Mobiltelefon in die Halterungen eingelegt und so mit dem Kraftfahrzeug verbunden sind, ein spezieller anstatt des allgemeinen Betriebsmodus für den Taschencomputer derart selektiert wird, dass zwischen Taschencomputer, Mobiltelefon und Satelliten-Positionsbestimmungsmittel eine datentechnische Verbindung hergestellt und der Taschencomputer ausschließlich in einer die Verkehrssicherheit nicht beeinträchtigenden Weise bedienbar ist.

Der Hauptgedanke der Erfindung besteht alternativ darin, anstelle von Taschencomputer und Mobiltelefon ein Smartphon zu verwenden und dass im Kraftfahrzeug eine Halterung zum Einlegen des Smartphons vorgesehen ist und dass, wenn das Smartphon in die Halterung eingelegt und so mit dem Kraftfahrzeug verbunden ist, ein spezieller anstatt des allgemeinen Betriebsmodus für das Smartphon derart selektiert wird, das zwischen Smartphon und Satelliten-Positionsbestimmungsmittel eine datentechnische Verbindung hergestellt und das Smartphon ausschließlich in einer die Verkehrssicherheit nicht beeinträchtigenden Weise bedienbar ist.

Die Erfindung ermöglicht die Nutzung von bereits bei vielen Kraftfahrzeugnutzern vorhandenen Standardgeräten zur Realisierung einer Offboard-Navigation im Kraftfahrzeug. Trotz der Nutzung der Konsumelektronikprodukte Taschencomputer und Mobiltelefon bzw. Smartphon (als integrative Kombination von Taschencomputer und Mobiltelefon) bewirkt die Erfindung jedoch eine die Verkehrssicherheit gewährleistende, einfache Bedienung sowie eine optimale Fahrzeugintegration. Die einfache Bedienung bezieht sich dabei sowohl auf den "Aufbau" des Systems als auch auf die Bedieneingaben des Kraftfahrzeugnutzers im aufgebauten Zustand.

Der Aufbau ist besonders leicht durchzuführen, da eine entsprechende Verschaltung der Komponenten bei Detektion der Verbindung zum Kraftfahrzeug vom Taschencomputer bzw. Smartphon automatisiert durchgeführt wird. Die Verbindung wird durch den Kraftfahrzeugnutzer dadurch bewirkt, dass er Taschencomputer und Mobiltelefon bzw. Smartphon in spezielle Halterungen einlegt. Diese Halterungen bieten neben der optionalen Möglichkeit, eine Verbindung zum Stromkreislauf des Kraftfahrzeuges herzustellen und so die Eigenstromversorgung der Komponenten zu schonen, auch einen hohen Schutz im Crashfall, z.B. gegen Umherfliegen der Komponenten. Somit ist eine optimale Fahrzeugintegration gewährleistet. Die Verschaltung der Komponenten wird beispielsweise über Leitungen zwischen den Halterungen vorgenommen.

Zugleich wird bei Detektion der Verbindung zum Kraftfahrzeug vom Taschencomputer bzw. Smartphon automatisiert ein spezieller Betriebsmodus selektiert. In diesem speziellen Betriebsmodus ist ausschließlich eine die Verkehrssicherheit nicht beeinträchtigende Bedienung des Taschencomputers bzw. Smartphons vorgesehen. Damit ist sichergestellt, dass der Kraftfahrzeugnutzer durch die Bedieneingaben am Taschencomputer bzw. Smartphon geringstmöglich vom Verkehrsgeschehen abgelenkt wird.

Ein weiterer Vorteil der Erfindung stellt der sehr geringe baulichen Aufwand dar. Insbesondere sind keine Verbindung zum Datenbus des Kraftfahrzeuges (z.B. "CAN", Controlled Area Network) oder Eingriffe in andere sicherheitskritische Anordnungen notwendig, da das erfindungsgemäße System autark arbeitet. Es sind lediglich mechanische Verbindungen der Halterungen bzw. des Satelliten-Positionsbestimmungsmittels mit dem Kraftfahrzeug darzustellen. Zusätzlich kann eine Verbindung zum Stromkreislauf des Kraftfahrzeuges - zur Schonung der Eigenstromversorgung der Komponenten - und/ oder eine elektrische Leitungen zwischen den Komponenten - zur datentechnischen Verschaltung - vorgesehen sein. Natürlich kann auch nur die Verbindung einer Komponente zum Stromkreislauf des Kraftfahrzeuges vorgesehen sein, wobei weitere Komponenten alternativ über ein parallel zur elektrischen Leitung mit Bordstrom versorgt werden. Zusammenfassend sind lediglich einfache Maßnahmen ohne Eingriffe in sicherheitskritische oder komplizierte Strukturen im Kraftfahrzeug notwendig.

Da ein Satelliten-Positionsbestimmungsmittel kein üblicherweise bei einem Kraftfahrzeugnutzer vorhandenes Standardgerät darstellt und auch nicht ohne weitere Komponenten nutzbar ist, kann das Satelliten-Positionsbestimmungsmittel fest im Kraftfahrzeug verbaut werden. Beispielsweise wird ein GPS-Empfänger ("Global Positioning System") in eine Halterung integriert verbaut und mit einer auf dem Armaturenbrett des Kraftfahrzeuges befestigten Antenne datentechnisch verbunden. Ein Eingriff in sicherheitskritische oder komplizierte Strukturen im Kraftfahrzeug ist dabei nicht notwendig. Alternativ können spezielle Taschencomputer und/ oder Mobiltelefone bzw. Smartphons eingesetzt werden, die bereits ein Satelliten-Positionsbestimmungsmittel umfassen, z.B. eine PCMCIA-Karte mit GPS-Funktionalität.

Eine weitere Erhöhung der Verkehrssicherheit wird dadurch erzielt, dass der Taschencomputer bzw. das Smartphon im speziellen Betriebsmodus durch einen einzigen Bedienvorgang vordefinierte Funktionen ausführt, wobei diese Funktionen automatisiert unter Verwendung des Mobiltelefons bzw. des Smartphons zumindest zeitweise eine Datenverbindung zu einer voreingestellten Rufnummer herstellen, entsprechende Daten anfordern und die empfangenen Daten auf dem Taschencomputer bzw. Smartphon geeignet darstellen. Eine derartige Automatisierung vordefinierter, üblicher Handlungsabläufe verringert die Zeitspanne weiter, in der der Kraftfahrzeugnutzer sich mit dem Taschencomputer bzw. Smartphon beschäftigen muss, und erhöht zusätzlich den Bedienkomfort.

Mit Vorteil wird vorgeschlagen, als Funktionen den Aufruf einer vorgewählten Internetseite und/ oder den Abruf elektronischer Dokumente und/ oder die Anforderung bestimmter Information zu einer Umgebung der aktuellen geographischen Position des Kraftfahrzeuges und/ oder den Start der Zielführung zu einer vorgegebenen geographischen Position vorzusehen. Dies sind vordefinierte, übliche Handlungsabläufe die ein Kraftfahrzeugnutzer eher häufig durchführt und die somit vorteilhaft als Funktion vorgebbar sind. Dabei sind bei einer jeweiligen Durchführung durchaus komplexe Operationen durchzuführen; beispielsweise sind beim Abruf elektronischer Dokumente Konfigurationseinstellungen der Datenverbindung einzustellen.

Für einen Kraftfahrzeugnutzer nützliche bestimmte Information zu einer Umgebung der aktuellen geographischen Position des Kraftfahrzeuges sind Parkmöglichkeiten und/ oder Tankstellen und/ oder Händler und/ oder Raststätten und/ oder Hotels und/oder Restaurants und/ oder Wettermeldungen und/ oder Kartendarstellungen und/ oder Verkehrsmeldungen. Die aktuelle geographische Position des Kraftfahrzeuges wird unter Verwendung des Satelliten-Positionsbestimmungsmittels bestimmt. Durch einen einzigen Bedienvorgang ist die gewünschte Information somit für den Kraftfahrzeugnutzer komfortabel anforderbar. Natürlich ist hier auch noch andere bestimmte Information möglich.

In einer bevorzugten Ausführungsform wird die angeforderte bestimmte Information auf dem Taschencomputer bzw. Smartphon als auswählbare Liste dargestellt. Dies ist eine übliche, dem Nutzer vertraute Art der Darstellung und wird von den meisten Taschencomputern bzw. Smartphons bereits unterstützt. In vorteilhafter Weise wird nach Auswahl eines Listenelements durch den Kraftfahrzeugnutzer zu der durch das Listenelement repräsentierten Einrichtung, z.B. einem Hotel, detaillierte Information auf dem Taschencomputer bzw. Smartphon dargestellt und durch einen einzigen Bedienvorgang ist eine Zielführung zur geographischen Position der Einrichtung startbar und/ oder eine Sprachverbindung zur Einrichtung bereitstellbar und/ oder die detaillierte Information ist in einen internen Speicher - z.B. die Adressverwaltung - des Taschencomputers bzw. Smartphons übernehmbar.

Die durch einen einzigen Bedienvorgang aufgerufene voreingestellte Internetseite ist vorzugsweise als personalisierte Portalseite des Kraftfahrzeugnutzers ausgebildet. Dabei werden mit "Portal" auf einem externen Rechner gespeicherte Daten bezeichnet, wobei diese Daten auch speziell für den Kraftfahrzeugnutzer gespeicherte elektronische Dokumente ("My Office"- Funktionalität) umfassen können. Personalisiert bedeutet hier, dass zumindest der Name des Kraftfahrzeugnutzers als Teil der Darstellung auf dem Taschencomputer bzw. Smartphon angezeigt wird und dass eine spezielle Telefonnummer für den Abruf elektronischer Dokumente (Nummer des "My Office"-Sprachausgabeservice) vorgesehen ist. Ein besonders bequemer Zugriff ergibt sich durch die Speicherung der nötigen Zugangsinformation zur personalisierte Portalseite des Kraftfahrzeugnutzers auf dem Taschencomputer bzw. Smartphon und dem automatischen Auslesen beim Aufruf. Derartige Speichermöglichkeiten sind beispielsweise "Internet-Cookies", die nach einmaliger, manueller Eingabe der Zugangsinformation bei nachfolgenden Zugriffen auf die personalisierte Portalseite des Kraftfahrzeugnutzers einen automatisierten Aufruf erlauben. Die einmalige, manuelle Eingabe der Zugangsinformation nimmt der Nutzer dabei im allgemeinen Betriebsmodus für den Taschencomputer bzw. das Smartphon vor, da er dann sämtliche Bedienmöglichkeiten des Taschencomputers bzw. Smartphons nutzen kann, beispielsweise eine Stifteingabe. Weiterhin kann vorgesehen sein, bei der Darstellung auf dem Taschencomputer bzw. Smartphon verwendete Anzeigeelemente, beispielsweise Bilder oder Icons, direkt auf dem Taschencomputer abzuspeichern ("Caching-Mechanismus") und so die Menge der drahtlos zu übertragenden Daten kostensparend zu verringern.

In einer besonders bevorzugten Ausführungsform ist vorgesehen, dass im speziellen Betriebsmodus manuell bedienbare Auslöseelemente zur Ausführung der vordefinierten Funktionen durch den Taschencomputer bzw. Smartphon bereitgestellt werden. Beispielsweise nutzen die meisten Taschencomputer bzw. Smartphons berührungsempfindliche Displays und unterstützen somit bereits eine entsprechende Darstellung berührungsempfindlicher Teilflächen des Displays ("Buttons") durch den Nutzer. Dies stellt eine zugleich komfortable und die Verkehrssicherheit gewährleistende Art der Bedienung dar, die mit geringem Aufwand auf dem Taschencomputer bzw. Smartphon realisierbar ist.

Vorteilhaft ist es, wenn dem Kraftfahrzeugnutzer durch einen einzigen Bedienvorgang im speziellen Betriebsmodus weitere nützliche Funktionen anforderbar bereitgestellt werden. Eine derartige Funktion ist die Bereitstellung einer Sprachverbindung zu einer externen Hilfszentrale, so dass für den Kraftfahrzeugnutzer im Bedarfsfall einfach Hilfe anforderbar ist. Die Nutzung des Mobiltelefons bzw. Smartphons wird vereinfacht, wenn der Taschencomputer bzw. das Smartphon im speziellen Betriebsmodus durch einen einzigen Bedienvorgang als manuell bedienbare Telefontasten ausgebildete Auslöseelemente bereitstellt, so dass der Kraftfahrzeugnutzer nicht die oft kleinen Tasten des Mobiltelefons bzw. Smartphons verwenden muss.

Eine vorteilhafte Weiterbildung der Erfindung ergibt sich, wenn der spezielle Betriebsmodus für den Taschencomputer bzw. das Smartphon nur dann eingestellt wird, wenn die Geschwindigkeit des Kraftfahrzeuges größer als ein vorgebbarer Grenzwert ist. In diesem Fall können Taschencomputer und/ oder Mobiltelefon bzw. Smartphon bereits in die Halterungen eingelegt und also mit dem Kraftfahrzeug verbunden und dennoch sämtliche Bedienmöglichkeiten des Taschencomputers bzw. Smartphons noch nutzbar sein. Somit kann der Kraftfahrzeugnutzer, wenn das Kraftfahrzeug steht, noch in vorteilhafter Weise zwischen allgemeinem und speziellem Betriebsmodus des Taschencomputers bzw. Smartphons auswählen. Die Verkehrssicherheit ist jedoch durch die automatisierte Detektion, das das Kraftfahrzeug noch steht, stets gewährleistet, da beim Überschreiten des Grenzwerts der Geschwindigkeit der spezielle Betriebsmodus für den Taschencomputer bzw. das Smartphon selektiert wird.

Am einfachsten wird die Geschwindigkeit des Kraftfahrzeuges unter Verwendung des Satelliten-Positionsbestimmungsmittels bestimmt. Damit ist keinerlei Verbindung zum Datenbus oder Eingriff in andere sicherheitskritische Anordnungen des Kraftfahrzeuges notwendig, um auf einfache Weise eine relativ genaue Geschwindigkeitsinformation zu erhalten.

Abgerufene elektronische Dokumente, beispielsweise die elektronische Post des Kraftfahrzeugnutzers, werden vorzugsweise per Sprachausgabe ausgegeben. Damit sind auch größere Datenmenge unter minimaler Ablenkung des Kraftfahrzeugnutzers ausgebbar. Die Sprachausgabe wird vorteilhafterweise über eine Freisprecheinrichtung vorgenommen. Dabei ist keinerlei Verbindung zum Datenbus oder Eingriff in andere sicherheitskritische Anordnungen des Kraftfahrzeuges notwendig. Wenn zusätzlich eine Verbindung vom erfindungsgemäßen System zum Audiosystem des Kraftfahrzeuges vorgesehen ist, um das Audiosystems bei Nutzung der Sprachausgabe stummzuschalten, wird der Komfort noch erhöht.

Eine bevorzugte Ausführungsform der Erfindung wird nun anhand von Zeichnungen näher erläutert. Dargestellt sind verschiedene Sichten auf das Display des Taschencomputers bzw. Smartphons. Der Einfachheit halber wird im Folgenden stets nur der Taschencomputer aufgeführt.

Dabei zeigen:
- Fig. 1: nutzbare Funktionen auf der Startseite, wenn der Taschencomputer in der Halterung steckt und das Kraftfahrzeug steht,
- Fig. 2: fingerbedienbare Homepage des Portals, wenn der Taschencomputer in der Halterung steckt,
- Fig. 3: Liste von Restaurants am aktuellen Standort als Ergebnis einer Wahl der Kategorie "Restaurant",
- Fig. 4: Detailinformation zu einem Restaurant
- Fig. 5: Übersichtskarte "Stadtplan"
- Fig. 6: stiftbedienbare Homepage des Portals im Stand,
- Fig. 7: nutzbare Funktionen auf der Startseite, wenn der Taschencomputer nicht in der Halterung steckt,
- Fig. 8: Darstellung der Telefonfunktion auf dem Taschencomputer,
- Fig. 9: Auswahl der Quelle der Adresse für die Navigation,
- Fig. 10: Darstellung der Seite des Verbindungsaufbaus und Routenempfangs der Offboard-Navigation,
- Fig. 11: Darstellung einer Seite der Offboard-Navigation mit Pfeilansicht.

Eine bevorzugte Ausführungsform der Erfindung verwendet als Taschencomputer einen Compaq IPAQ 3850 oder 3870 und als Mobiltelefon ein Siemens S45i. Besitzt der Kraftfahrzeugnutzer bereits einen entsprechenden Taschencomputer und/ oder ein entsprechendes Mobiltelefon, so kann er das jeweilige Gerät einsetzen und muß nur ein "Einbaupaket" erwerben.

Der Taschencomputer umfasst 64MB RAM Arbeitsspeicher, ein TFT Display mit 65.536 Farben sowie ein umfangreiches "Microsoft Pocket PC 2002" Softwarepaket. Das Softwarepaket verfügt über Pocket Word und Excel, einen Internet Explorer zur Darstellung von "HTML-Internet-Seiten", den Windows Media Player 8, Pocket Outlook, dem MSN Messenger und Eingabeoptionen wie z.B. Handschriftenerkennung.

Das Einbaupaket umfasst die Komponenten, die den Betrieb des erfindungsgemäßen Systems im Kraftfahrzeug ermöglichen. Das Einbaupaket umfasst im einzelnen eine Freisprecheinrichtung, eine Halterung für das Mobiltelefon, ein angepasstes Kabel mit Stecker zum Anschluss der Freisprecheinrichtung an die Halterung, einen Adapterstecker für das Mobiltelefon, eine Halterung für den Taschencomputer, eine Vorverarbeitungseinheit mit integriertem GPS-Empfänger ("Global Positioning System") die dem Taschencomputer zur Vorverarbeitung der GPS-Signale vorgeschaltet ist ("I-Box"), eine GPS-Antenne mit Kabel zum GPS-Empfänger sowie ein Verbindungskabel zwischen Mobiltelefon und Taschencomputer.

Um das erfindungsgemäße System bestimmungsgemäß zu nutzen, sind vom Kraftfahrzeugnutzer vorab durchzuführen eine Registrierung als Nutzer bei einer vorgewählten Internet-Seite, dem Portal, eine Freischaltung für den Internetzugang mittels des Mobiltelefons und eine Integration der für den Betrieb des erfindungsgemäßen Systems auf dem Taschencomputer notwendigen Verfahren ("Software-Installation"). Als Teil der Software-Installation werden bei der Darstellung auf dem Taschencomputer verwendete Anzeigeelemente, beispielsweise Bilder oder Icons, direkt auf dem Taschencomputer abgespeichert.

Verschiedene im Rahmen des erfindungsgemäßen Systems nutzbare Funktionen sind direkt ansteuerbar, diese Funktionen umfassen die Offboard-Navigation und die Telefon-Funktion. Mit der Telefon-Funktion ist das berührungsempfindliche Display des Taschencomputers für den Kraftfahrzeugnutzer komfortabel zur Eingabe von Telefonnummern nutzbar, um dann mit der Freisprecheinrichtung zu telefonieren.

Weitere im Rahmen des erfindungsgemäßen Systems nutzbare Funktionen sind unter Verwendung des Portals zugänglich. Im Folgenden sind diese Funktionen mit entsprechenden Unterfunktionen aufgelistet:
Funktion Verkehr
   - Umkreissuche mit diversen interessanten Punkten (POI, "Point of Interest")
   - Verkehrslage
   - Stadtplan
Funktion Reisen
   - Hotelsuche im Rahmen der Umkreissuche
   - Restaurantsuche im Rahmen der Umkreissuche
Funktion elektronische Dokumente ("My Office")
   - My Office mit den Funktionen E-Mail, Terminen, Adressen
Funktion Wetter

Einige der Funktionen sind während der Fahrt nutzbar, andere nur bei Stillstand des Kraftfahrzeuges. Verschiedene Funktionen sind auf unterschiedliche Art nutzbar je nachdem ob das Kraftfahrzeug fährt oder steht.

Im folgenden werden die unter Verwendung des Portals zugänglichen Funktionen des erfindungsgemäßen Systems beschrieben.
- Navigate-to (Übernahme der Zieladresse in die Offboard-Navigation) :
   Mit der Funktion "Navigate-to" kann der Kunde eine Adresse, z.B. die eines interessanten Punktes (POI), an die Navigation übergeben. Die Route wird daraufhin automatisiert von der aktuellen geographischen Position zum gewünschten Ziel berechnet. Die Übergabe erfolgt über geographischen Koordinaten. Somit wird die umständliche und die Verkehrssicherheit nicht gewährleistende Eingabe der Daten mit dem Stift in die Offboard-Navigation vermieden. Die Adresse des anvisierten POI, z.B. ein Hotel, ist mit der Funktion komfortabel an die Offboard-Navigation übergebbar und die Navigation startbar.
- Call-to (Übernahme der Telefonnummer in die Telefonfunktion):
   Mit der Funktion "Call-to" kann der Kraftfahrzeugnutzer komfortabel die Telefonnummer eines ausgewählten interessanten Punktes an die Telefonfunktion übergeben, die anschließend automatisiert einen Rufaufbau initiiert. Somit ist die Telefonnummer in die Telefonfunktion per Fingerauswahl komfortabel übernehmbar. Der Kraftfahrzeugnutzer umgeht damit die unter Umständen die Verkehrssicherheit nicht gewährleistende Eingabe der Nummer am Mobiltelefon.
- Add-Adress (Übernahme von Adressdaten in das Adressbuch des Taschencomputers bzw. Smartphons):
   Mit der Funktion "Add-Adress" kann der Kraftfahrzeugnutzer komfortabel die Adresse eines ausgewählten interessanten Punktes an das Adressbuch des Taschencomputers übergeben. Damit ist die Adresse des ausgewählten POI komfortabel in die Kontakte des Taschencomputers übernehmbar, eine umständliche Eingabe der Adresse entfällt.
- Text-to-Speech (Vorlesen von E-Mails, Terminen und Aufgaben mittels Sprachausgabeserver):
   Mit der Funktionalität "Text to Speech" kann der Kraftfahrzeugnutzer sich seine aktuellen E-Mails, Termine und Aufgaben während der Fahrt vorlesen lassen. Die Beantwortung einer E-Mail ist sogar per Sprache möglich. Die Funktion wird vom Online-Portal bereitgestellt . Der Kraftfahrzeugnutzer wählt sich dabei mit seiner persönlichen Telefonnummer und PIN ein. Somit sind E-Mails, Aufgaben und Termine im Rahmen des UMS-Services ("Unified Messaging Services") für den Kraftfahrzeugnutzer vorlesbar. Der Button "My Office" auf der Portal-Internetseite ("Homepage") ermöglicht diese Funktion. Das Vorlesen von solchen Inhalten im Kraftfahrzeug reduziert die Ablenkung von Kraftfahrzeugnutzer, da eine E-Mail bspw. nicht auf dem Display des Endgerätes abgelesen werden muss. Selbst die Beantwortung der E-Mail ist per Sprache möglich. Dazu wird der gesprochene Text als ."wav-Datei" an den Absender als Rückantwort mit der E-Mail gesendet.
- Location-based-Services (Nutzung der GPS Koordinate zur Ermittlung von Diensten am aktuellen Standort des Kraftfahrzeugs):
   Über das im Kraftfahrzeug verbaute GPS-Antenne mit GPS-Empfänger in der I-Box ist die aktuelle Kraftfahrzeugposition im Rahmen der Dienste des Portals im Kraftfahrzeug nutzbar. So kann beispielsweise das Ergebnis der Suche nach einem interessanten Punkt auf die aktuelle geographische Position des Kraftfahrzeugs bezogen erfolgen, ohne daß der Kraftfahrzeugnutzer den Suchmittelpunkt, die aktuelle geographische Position, manuell eingeben muss. Diese Funktion ermöglicht die standortbezogene Nutzung von Diensten. Per GPS wird der aktuelle Standort, d.h. die derzeitige geographische Position des Kraftfahrzeugs an den Diensteanbieter übertragen, der ein Ergebnis passend zum aktuellen Standort liefert, bspw. die nächstgelegenen Hotels in der Umgebung. Die Funktion erspart die umständliche, manuelle Eingabe des aktuellen Standorts.

Das System bietet eine Vielzahl von Vorteilen:
- Nutzung der Portal-Funktionen auch im Kraftfahrzeug
- sicherheitsorientierte Fingerbedienbarkeit im Kraftfahrzeug
- kraftfahrzeuggerechte Benutzeroberfläche
- Sprachausgabe Funktionen
- Funktionen an der aktuellen aktuellen geographischen Position ("Location Based Services")
- optimiert für die Taschencomputer der Compaq IPAQ 38er Serie
- Verknüpfung des Portals mit Navigations- und Telefonfunktion
- Umfassende Offboard-Navigation
- komfortable Telefonfunktion
- feste Fahrzeugintegration

Die Nutzung des Portals im Kraftfahrzeug unterliegt verschiedenen Vorgaben, die auf eine sichere Bedienung während der Fahrt abzielen. Aus diesem Grunde reagiert die Software des Portals geschwindigkeitsbezogen und bietet dem Kraftfahrzeugnutzer eine unterschiedliche Nutzung des Portals im Kraftfahrzeug an: während der Fahrt (der Taschencomputer steckt in der Halterung) sind alle Dienste des Portals nur fingerbedienbar und im Umfang eingeschränkt. Im Stand (der Taschencomputer steckt ebenfalls in der Halterung) hingegen stehen dem Kraftfahrzeugnutzer alle Umfänge der Dienste stiftbedienbar zur Verfügung.

Im folgenden wird deswegen zwischen einer Bedienung des Portals während der Fahrt und im Stand unterschieden.

Der Kraftfahrzeugnutzer erlebt folgenden Ablauf bei Nutzung des Online-Portals: Schaltet der Kraftfahrzeugnutzer den Taschencomputer im Kraftfahrzeug ein, so wird für 4 Sekunden eine Warnhinweisseite angezeigt. Diese kann per Klick mit dem Finger geschlossen werden. Anschließend wird die Startseite angezeigt.

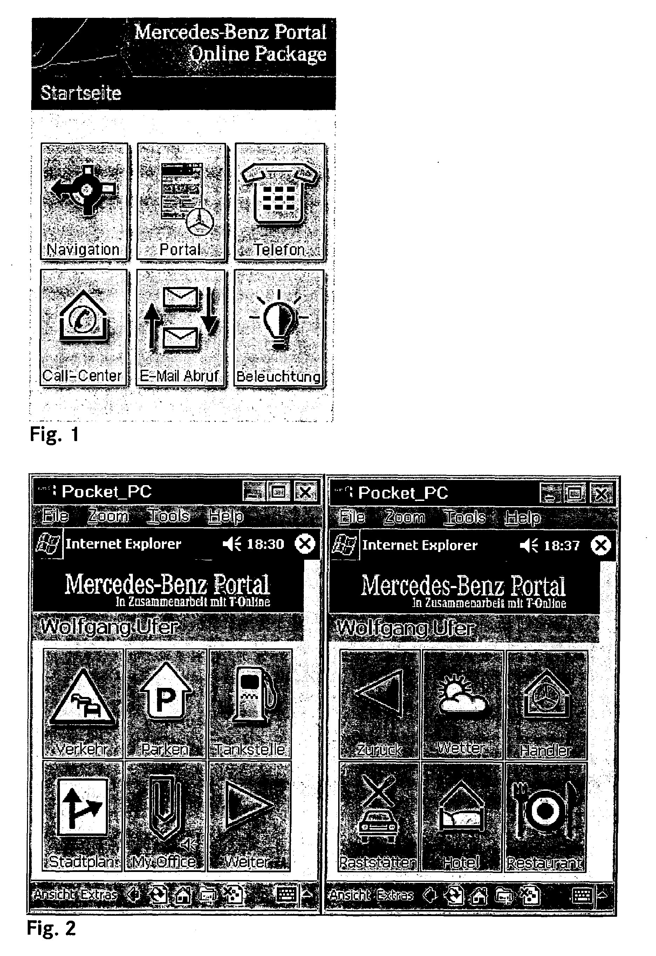

In Fig. 1 sind die Funktionen dargestellt, die der Kraftfahrzeugnutzer auf der Startseite nutzen kann wenn der Taschencomputer in der Halterung steckt und das Kraftfahrzeug steht.
- Der Button "Navigation" startet die Offboard-Navigation
- Der Button "Portal" startet das Portal im Kraftfahrzeug
- Der Button "Telefon" startet die Telefonfunktion
- Der Button "Call-Center" startet die Telefonfunktion und baut automatisch eine Verbindung zum Portal-Call-Center auf
- Der Button "E-Mail Abruf" startet den POP3 E-Mail Abruf
- Der Button "Beleuchtung" startet die Beleuchtungseinstellungen des Compaq iPAQ. Der Kraftfahrzeugnutzer kann dann über einen Schieberegler die Beleuchtung einstellen

Steckt der Kraftfahrzeugnutzer den Taschencomputer in die Halterung seines Kraftfahrzeuges und drückt der Kraftfahrzeugnutzer den "Portal" Button, so wird die Geschwindigkeit des Kraftfahrzeugs ermittelt. Befindet sich das Kraftfahrzeug im Stand, so kann der Kraftfahrzeugnutzer mit der dargestellten Seite zwischen der "Fingerbedienung" und der "Stiftbedienung" des Portals wählen. Während der Fahrt wird diese Auswahlseite nicht angeboten - die Bedienung des Portals ist dann nur mit dem Finger möglich.

Ist der Kraftfahrzeugnutzer noch nicht im Portal angemeldet, wird eine Login-Seite aufgerufen. Dort muss der Kraftfahrzeugnutzer Benutzername und Passwort eintragen. Die Eintragung geschieht einmalig, da ein Cookie auf dem TASCHENCOMPUTER abgelegt wird, in dem Benutzername und Passwort gespeichert sind. Bei der nächsten Nutzung des Portals gelangt der Kraftfahrzeugnutzer direkt in personalisiertem Zustand zur Homepage. Eine erneute Eingabe von Benutzernamen und Passwort ist nicht nötig.

In Fig. 2 ist die fingerbedienbare Homepage des Portals dargestellt, die auf dem Taschencomputer geladen wird, wenn der Kraftfahrzeugnutzer die Fingerbedienung wählt bzw. sich das Kraftfahrzeug in fahrendem Zustand befindet. Die Homepage besteht aus zwei Seiten, die per "Weiter" und "Zurück" Button fingerbedienbar ausgewählt werden können. Der Kraftfahrzeugnutzer kann während der Fahrt auf der Homepage verschiedene Kategorien der Umkreissuche per Druck auf den Button wählen. Dieses sind im einzelnen: Parken, Tankstelle, Händler, Raststätten, Hotel und Restaurant auf der ersten und zweiten Homepage.

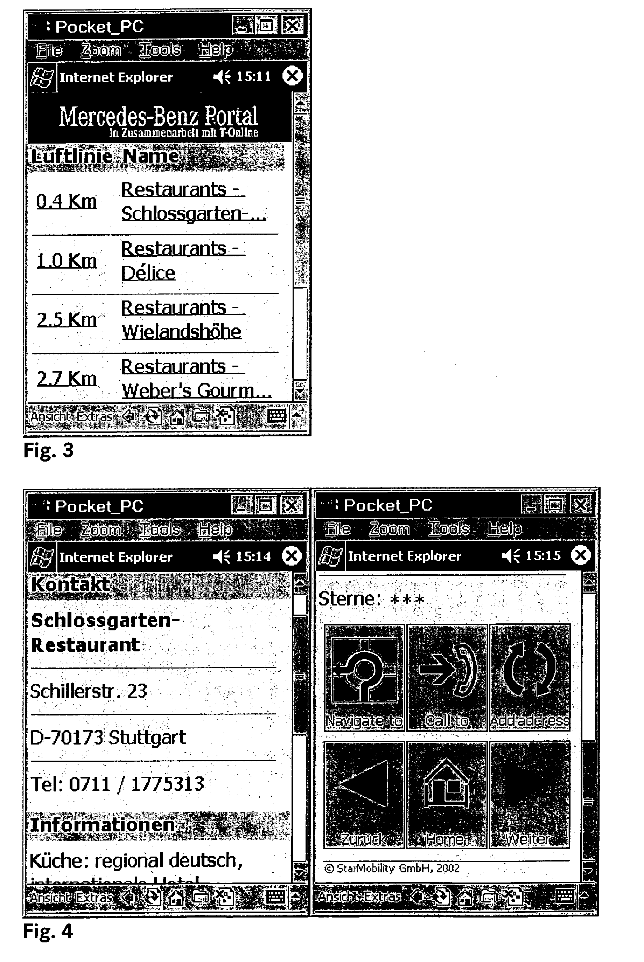

In Fig. 3 ist dargestellt, wie nach Wahl einer Kategorie, bspw. ein Restaurant, der Kraftfahrzeugnutzer als Ergebnis eine Liste von Restaurants am aktuellen Standort erhält. Dieser "Location-based-Service" ist für den Kraftfahrzeugnutzer deutlich von Nutzen, denn er muss keine Adresse des aktuellen Standorts eingeben, denn diese wird automatisch durch die vorhandenen GPS-Koordinaten ermittelt. Der Kraftfahrzeugnutzer kann mit dem berührungsempfindlichen Display ("Keypad") des Taschencomputer komfortabel einen anzuzeigenden Ausschnitt der Darstellung wählen ("scrollen").

Nach Auswahl eines bestimmten Restaurants erhält der Kraftfahrzeugnutzer eine Detailinformation zum Restaurant. Dies ist in Fig. 4 gezeigt. Mit der Funktion "Navigate-to" kann der Kraftfahrzeugnutzer sich dann einfach und komfortabel zum gewünschten Restaurant navigieren lassen, denn der Zielort wird automatisiert an die Offboard-Navigation übergeben, ohne dass der Kraftfahrzeugnutzer diesen umständlich eingeben muss. Zudem kann er sich noch komfortabel per "Call-to" mit dem Restaurant verbinden lassen, um bspw. einen Tisch zu reservieren. Auch die einfache Übernahme der Adresse des Restaurants ist per "Add-Address" möglich. Mit dem Button "Home" gelangt der Kraftfahrzeugnutzer wieder zur Homepage des Portals.

Der Kraftfahrzeugnutzer wählt während der Fahrt den Button "Verkehr" (siehe Fig. 2), um die aktuelle Verkehrslage am aktuellen Standort abzufragen. Er erhält als Ergebnis eine Liste der aktuellen Verkehrslageinformation am aktuellen Standort. Mit dem Keypad des Taschencomputer kann der Kraftfahrzeugnutzer durch drücken nach unten scrollen. Mit dem Button "Weiter" kann er die nächsten Verkehrslageinformationen anfragen. Mit dem Button "Home" gelangt er wieder zur Homepage des Portals.

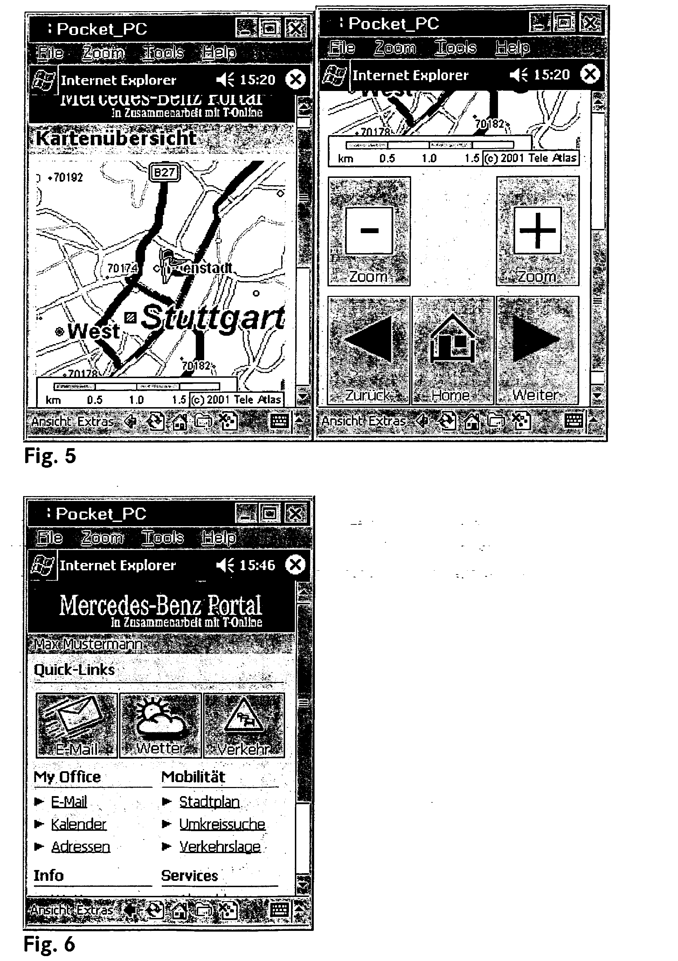

Der Kraftfahrzeugnutzer wählt während der Fahrt auf der Homepage den Button "Stadtpan" (siehe Fig. 2), um sich den Stadtplan am aktuellen Standort anzeigen zu lassen. Als Ergebnis erhält der Kraftfahrzeugnutzer eine Übersichtskarte des aktuellen Standorts. Eine solche Übersichtskarte zeigt Fig. 5. Durch Drücken der Buttons "+" oder "-" wird die Kartenansicht entsprechend gezoomt. Mit dem Button "Home" gelangt der Kraftfahrzeugnutzer wieder zur Homepage.

Der Kraftfahrzeugnutzer wählt während der Fahrt den Button "My Office" (siehe Fig. 2), um sich die aktuellen E-Mails, Termine und Aufgaben vorlesen zu lassen. Der Kraftfahrzeugnutzer muss zuvor den UMS-Service (Unified Messaging Service) im My Office Bereich des Portals freigeschaltet haben. Nach drücken des Buttons wechselt die Software direkt in die Telefonfunktion und wählt automatisch die UMS (Unified Messaging Number) des Kraftfahrzeugnutzer. Nach Verbindung mit dem Sprachservers des Portals kann der Kraftfahrzeugnutzer sich durch drücken von Ziffern aktuelle E-Mails, Termine und Aufgaben vorlesen lassen.

Der Kraftfahrzeugnutzer wählt während der Fahrt den Button "Wetter" (siehe Fig. 2), um sich die Wettervorhersage des aktuellen Standorts anzeigen zu lassen. Als Ergebnis erhält der Kraftfahrzeugnutzer die Vorhersage des Wetters für den aktuellen Standort, der per GPS Koordinate ermittelt wird, der nächsten drei Tage.

Steht das Kraftfahrzeug, hat der Kraftfahrzeugnutzer die Möglichkeit, zwischen der fingerbedienbaren Homepage und der stiftbedienbaren Homepage zu wählen. Die stiftbedienbare Homepage erlaubt dem Kraftfahrzeugnutzer die Eingabe von Daten mit dem Stift, um die Suche nach Informationen noch genauer zu spezifizieren. Wählt der Kraftfahrzeugnutzer die Bedienung mit dem Stift im Stand, wird die stiftbedienbare Homepage des Portals geladen, diese zeigt Fig. 6. Anhand der auf dem Display durch Berührung auswählbaren Worte ("Quicklins") kann der Kraftfahrzeugnutzer schnell zu den Diensten E-Mail, Wetter und Verkehrslage gelangen. Die Dienste werden im weiteren beschrieben.

Der Kraftfahrzeugnutzer kann auf der stiftbedienbaren Homepage den textuellen Link "Umkreissuche" wählen. Dann sind auf der Seite "Ortseingabe" die Adresse bzw. den Ort manuell vom Kraftfahrzeugnutzer eingebbar, an dem der interessante Punkt gesucht werden soll. Auf der Seite "Interessante Punkte" sind für den Kraftfahrzeugnutzer interessante Punkt wählbar. Wählt der Kraftfahrzeugnutzer z.B. die Kategorie "Hotel", so erhält er eine Liste der Hotels um seine manuell eingetragene Adresse. Mit einem Zoomkeil unter der Karte kann der Kraftfahrzeugnutzer die Karte entsprechend seinen Vorstellungen zoomen. Wählt der Kraftfahrzeugnutzer dann ein bestimmtes Hotel aus, so erhält er Detailinformationen zum besagten Hotel.

Wählt der Kraftfahrzeugnutzer im Stand auf der Homepage den Quicklink "Verkehr" bzw. den Textlink Verkehrslage, wird die Übersichtsseite des Verkehrslagedienstes geladen. Auf der Übersichtsseite des Verkehrslagedienstes kann der Kraftfahrzeugnutzer wählen zwischen der
- Fernstraßenabfrage (Suche nach manueller Eingabe)
- Regionenabfrage (Suche nach definierten Regionen)
Wählt der Kraftfahrzeugnutzer bspw. die Fernstraße A3, so erhält er als Ergebnis eine Liste der aktuellen Verkehrslageinformationen. Anhand des Zoomkeils unter der Karte kann die gewünschte Zoomstufe der Karte gewählt werden.

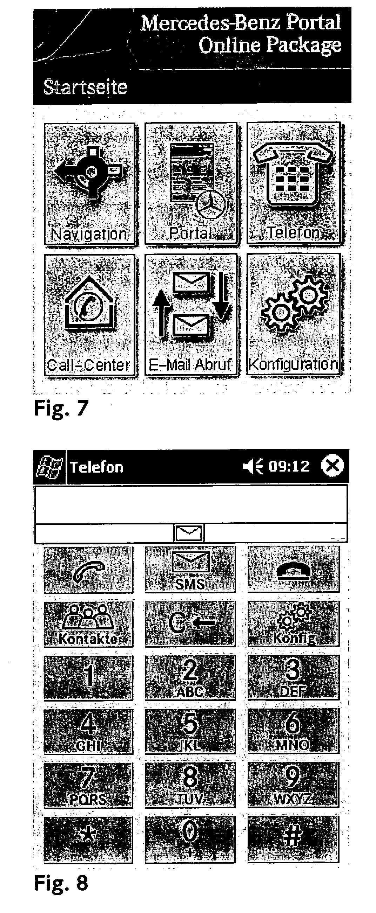

Zur Konfiguration verschiedener Einstellungen muss der Taschencomputer aus der Halterung im Kraftfahrzeug genommen werden. Automatisch wird eine andere Startseite geladen. Die Konfiguration ist bei Erstnutzung durchzuführen. Der Kraftfahrzeugnutzer kann im Nachhinein die Konfiguration ändern. Hat der Kraftfahrzeugnutzer den Taschencomputer aus der Halterung gezogen, wird die in Fig. 7 gezeigte Startseite geladen. Statt des Buttons "Beleuchtung" enthält diese einen Button "Konfiguration".

Der Kraftfahrzeugnutzer muss bei Erstnutzung zunächst seine Mobiltelefonnummer, seinen Internet Service Provider (z.B. D1 oder E-Plus), den Verbindungstyp (z.B. Infrarot, Bluetooth) zwischen Taschencomputer und Mobiltelefon zur Nutzung einiger Funktionen außerhalb des Kraftfahrzeugs und die Verbindungsart (GSM, GPRS) auswählen. Im Nachhinein kann diese Konfiguration verändert werden. Ein Reboot ist dann erforderlich. Über den Hilfe-Link erhält der Kraftfahrzeugnutzer Informationen zu den einzelnen Einstellungen.

Auf dem nächsten Screen kann der Kraftfahrzeugnutzer die E-Mail Einstellungen vornehmen. Er muss dazu seinen Namen sowie sein Benutzernamen und das Passwort eintragen, die er bei der Registrierung im Portal erhalten hat.

Ändert der Kraftfahrzeugnutzer seine Konfiguration, ist ein Reboot des Systems vorzunehmen, damit die neuen Einstellungen übernommen werden können.

Das Portal umfasst eine Telefonfunktion. Anhand derer kann der Kraftfahrzeugnutzer bei gestecktem Taschencomputer in der Halterung komfortabel über die Oberfläche des Taschencomputer eine Telefonnummer eingeben und über die Freisprecheinrichtung des Kraftfahrzeugs telefonieren.

Wählt der Kraftfahrzeugnutzer den Button "Telefon" auf der Startseite (siehe Fig. 2), so öffnet sich die in Fig. 8 gezeigte Telefonfunktion. Die zentrale Bedienseite und die Funktionen der Telefonsoftware entsprechen der von handelsüblichen Mobiltelefonen. Beispielsweise sind eine Auswahl einer Telefonnummer aus den im Taschencomputer gespeicherten "Kontakten" und/ oder gewählte Rufnummern, eingegangene Anrufe und verpasste Anrufe auswählbar.

Die Offboard-Navigation bietet:
- Korridornavigation (Komfortroute inklusive Korridor) Die Navigation bietet die Option, einen Korridor neben der Basisroute herunterzuladen. Verlässt der Kraftfahrzeugnutzer die Basisroute, so erfolgen weiterhin Navigationskommandos, da die Nebenstraßen ebenfalls mit heruntergeladen werden. Erst wenn der Kraftfahrzeugnutzer auch diesen Korridor verlässt, muss eine neue Navigationsanfrage gestartet werden. Der Kraftfahrzeugnutzer wird dazu vom System aufgefordert.
- Nutzung der Navigation mit GSM/GPRS
   Der Kraftfahrzeugnutzer kann die Navigation mit GSM- und vor allem auch mit GPRS nutzen. Es erfolgt somit keine Kommunikation per SMS zwischen dem fahrzeugseitiges System und dem externen Navigationsserver, was bei stetig steigenden SMS Gebühren von Vorteil ist.
- Kartenmaterial Europa
   Der Kraftfahrzeugnutzer kann die Navigation in Europa nutzen.
- Dynamische Navigation
   Der Kraftfahrzeugnutzer kann optional die Navigation auch dynamisch nutzen, dass heißt die Routenberechnung erfolgt unter Einbeziehung von aktuellen Verkehrslageinformationen.
- Stets aktuelles Kartenmaterial
   Die Daten für die Routenberechnung werden von einem Navigationsserver bei jeder neuen Routenanfrage geladen. Damit sind die Routendaten im Vergleich zu den Daten einer CD stets aktuell. Zudem erspart der Kraftfahrzeugnutzer sich den Kauf einer neuen Update-CD.

### Beispielhaft für die Offboard-Navigation zeigen:

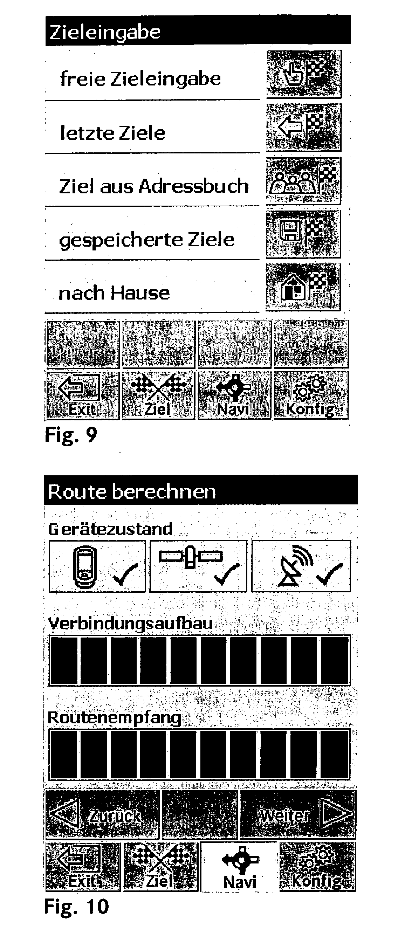

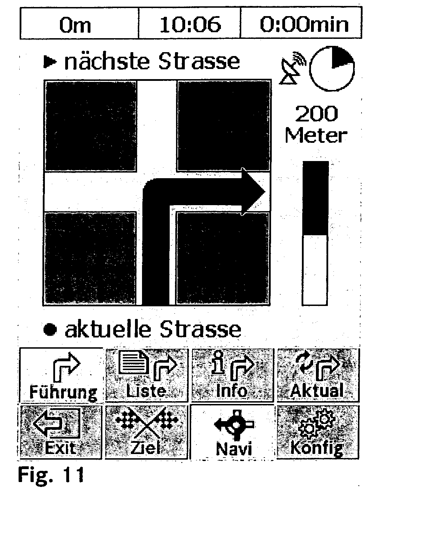

Fig. 9 eine Auswahl der Quelle der Adresse für die Navigation, Fig. 10 eine Seite des Verbindungsaufbaus und des Routenempfangs der Navigation, Fig. 11 eine Seite der Navigation mit Pfeilansicht. Dabei sind über einen Button "Konfiguration" verschiedene Einstellungen für die Offboard-Navigation vornehmbar, z.B. die Lautstärke vorwählbar.

Der E-Mail Abruf kopiert lediglich mit dem POP3 Protokoll die E-Mails des Portals in das "Pocket Outlook" des Taschencomputers, es findet keine Synchronisation statt. Diese Funktion ist nur im Stand möglich. Dazu wählt der Kraftfahrzeugnutzer den Button "E-Mail Abruf" auf der Startseite des Portals.

Eine Folgescreen ermöglicht es dem Kraftfahrzeugnutzer, die Downloadgröße der E-Mails und die Downloadmenge einzustellen. Mit dem Button OK bestätigt er einfach die Einstellungen.

Nach Bestätigung des E-Mail Abruf wird das Pocket Outlook (Posteingang) des Taschencomputer geöffnet. Der E-Mail Abruf erfolgt.

## Patentansprüche

1. Multimediasystem, insbesondere zur Realisierung einer Offboard-Navigation in einem Kraftfahrzeug, umfassend die Komponenten lösbar mit dem Kraftfahrzeug verbindbarer Taschencomputer, lösbar mit dem Kraftfahrzeug verbindbares Mobiltelefon und Satelliten-Positionsbestimmungsmittel,
**dadurch gekennzeichnet,**
**dass** im Kraftfahrzeug Halterungen zum Einlegen von Taschencomputer und Mobiltelefon vorgesehen sind und dass, wenn Taschencomputer und Mobiltelefon in die Halterungen eingelegt und so mit dem Kraftfahrzeug verbunden sind, ein spezieller anstatt des allgemeinen Betriebsmodus für den Taschencomputer derart selektiert wird, dass zwischen Taschencomputer, Mobiltelefon und Satelliten-Positionsbestimmungsmittel eine datentechnische Verbindung hergestellt und der Taschencomputer ausschließlich in einer die Verkehrssicherheit nicht beeinträchtigenden Weise bedienbar ist.

2. Multimediasystem, insbesondere zur Realisierung einer Offboard-Navigation in einem Kraftfahrzeug, umfassend die Komponenten lösbar mit dem Kraftfahrzeug verbindbares Smartphon und Satelliten-Positionsbestimmungsmittel,
**dadurch gekennzeichnet,**
**dass** im Kraftfahrzeug eine Halterung zum Einlegen des Smartphons vorgesehen ist und dass, wenn das Smartphon in die Halterung eingelegt und so mit dem Kraftfahrzeug verbunden ist, ein spezieller anstatt des allgemeinen Betriebsmodus für das Smartphon derart selektiert wird, das zwischen Smartphon und Satelliten-Positionsbestimmungsmittel eine datentechnische Verbindung hergestellt und das Smartphon ausschließlich in einer die Verkehrssicherheit nicht beeinträchtigenden Weise bedienbar ist.

3. Multimediasystem nach Anspruch 1 oder 2,
**dadurch gekennzeichnet,**
**dass** der Taschencomputer bzw. das Smartphon im speziellen Betriebsmodus durch einen einzigen Bedienvorgang vordefinierte Funktionen ausführt, wobei diese Funktionen automatisiert unter Verwendung des Mobiltelefons bzw. des Smartphons zumindest zeitweise eine Datenverbindung zu einer voreingestellten Rufnummer herstellen, entsprechende Daten anfordern und die empfangenen Daten auf dem Taschencomputer bzw. dem Smartphon geeignet darstellen.

4. Multimediasystem nach Anspruch 3,
**dadurch gekennzeichnet,**
**dass** als Funktionen der Aufruf einer vorgewählten Internetseite und/ oder der Abruf elektronischer Dokumente und/ oder die Anforderung bestimmter Information zu einer Umgebung der aktuellen geographischen Position des Kraftfahrzeuges und/ oder der Start der Zielführung zu einer vorgegebenen geographischen Position vorgesehen sind.

5. Multimediasystem nach Anspruch 4,
**dadurch gekennzeichnet,**
**dass** als bestimmte Information Parkmöglichkeiten und/ oder Tankstellen und/ oder Händler und/ oder Raststätten und/ oder Hotels und/ oder Restaurants und/ oder Geldautomaten und/ oder Wettermeldungen und/ oder Kartendarstellungen und/ oder Verkehrsmeldungen in einer Umgebung der aktuellen geographischen Position des Kraftfahrzeuges anforderbar sind.

6. Multimediasystem nach Anspruch 5,
**dadurch gekennzeichnet,**
**dass** die angeforderte bestimmte Information auf dem Taschencomputer bzw. dem Smartphon als auswählbare Elemente einer Liste dargestellt wird.

7. Multimediasystem nach Anspruch 6,
**dadurch gekennzeichnet,**
**dass** nach Auswahl eines Listenelements durch den Kraftfahrzeugnutzer zu der durch das Listenelement repräsentierten Einrichtung detaillierte Information auf dem Taschencomputer bzw. dem Smartphon dargestellt werden und durch einen einzigen Bedienvorgang eine Zielführung zur geographischen Position der Einrichtung startbar und/ oder eine Sprachverbindung zur Einrichtung bereitstellbar und/ oder die detaillierte Information in einen internen Speicher des Taschencomputers bzw. des Smartphons übernehmbar ist.

8. Multimediasystem nach Anspruch 4,
**dadurch gekennzeichnet,**
**dass** die voreingestellte Internetseite als personalisierte Portalseite des Kraftfahrzeugnutzers ausgebildet ist.

9. Multimediasystem nach Anspruch 8,
**dadurch gekennzeichnet,**
**dass** Zugangsinformation zur personalisierten Portalseite des Kraftfahrzeugnutzers auf dem Taschencomputer bzw. auf dem Smartphon gespeichert ist und beim Aufruf automatisch ausgelesen wird.

10. Multimediasystem nach einem der Ansprüche 3 bis 9,
**dadurch gekennzeichnet,**
**dass** im speziellen Betriebsmodus manuell bedienbare Auslöseelemente zur Ausführung der vordefinierten Funktionen durch den Taschencomputer bzw. das Smartphon bereitgestellt werden.

11. Multimediasystem nach einem der Ansprüche 1 bis 10,
**dadurch gekennzeichnet,**
**dass** der Taschencomputer bzw. das Smartphon im speziellen Betriebsmodus durch einen einzigen Bedienvorgang eine Sprachverbindung zu einer externen Hilfszentrale bereitstellt.

12. Multimediasystem nach einem der Ansprüche 1 bis 11,
**dadurch gekennzeichnet,**
**dass** der Taschencomputer bzw. das Smartphon im speziellen Betriebsmodus durch einen einzigen Bedienvorgang als manuell bedienbare Telefontasten ausgebildete Auslöseelemente bereitstellt.

13. Multimediasystem nach einem der Ansprüche 1 bis 12,
**dadurch gekennzeichnet,**
**dass** der spezielle Betriebsmodus für den Taschencomputer bzw. das Smartphon nur selektiert wird, wenn die Geschwindigkeit des Kraftfahrzeuges größer als ein vorgebbarer Grenzwert ist.

14. Multimediasystem nach Anspruch 13,
**dadurch gekennzeichnet,**
**dass** wenn die Geschwindigkeit des Kraftfahrzeuges kleiner als der vorgebbare Grenzwert ist, der Kraftfahrzeugnutzer zwischen dem speziellen und dem allgemeinen Betriebsmodus des Taschencomputer bzw. des Smartphons auswählen kann.

15. Multimediasystem nach Anspruch 13 oder 14,
**dadurch gekennzeichnet,**
**dass** die Geschwindigkeit des Kraftfahrzeuges unter Verwendung des Satelliten-Positionsbestimmungsmittels bestimmt wird.

16. Multimediasystem nach Anspruch 4,
**dadurch gekennzeichnet,**
**dass** abgerufene elektronische Dokumente per Sprachausgabe ausgebbar sind.

17. Multimediasystem nach Anspruch 16,
**dadurch gekennzeichnet,**
**dass** zur Sprachausgabe eine Freisprecheinrichtung des Mobiltelefons bzw. des Smartphons genutzt wird.

18. Multimediasystem nach Anspruch 16 oder 17,
**dadurch gekennzeichnet,**
**dass** eine Verbindung zum Audiosystem des Kraftfahrzeuges vorgesehen ist, zur Stummschaltung des Audiosystems bei Nutzung der Sprachausgabe.
